# EUROPEAN PATENT SPECIFICATION

(11) **EP 3 351 766 B1**
(45) Date of publication and mention of the grant of the patent: **31.03.2021**
(21) Application number: 18153071.8
(22) Date of filing: 23.01.2018
(51) Int. Cl.: F02C 3/113, F02K 3/06, F02C 7/36

(54) **ADVANCED GEARED GAS TURBINE ENGINE**
HOCHENTWICKELTER GETRIEBEGASTURBINENMOTOR
MOTEUR À TURBINE À GAZ À RÉDUCTEUR AVANCÉ

(30) Priority: 23.01.2017 US 201715412102
(43) Date of publication of application: 25.07.2018
(73) Proprietor: Raytheon Technologies Corporation, Farmington, CT 06032 (US)
(72) Inventor: KUPRATIS, Daniel Bernard, Wallingford, CT Connecticut 06492 (US); HANRAHAN, Paul R., Farmington, CT Connecticut 06032 (US)
(74) Representative: Dehns

(56) References cited:
- EP-A2- 2 728 140
- DE-A1- 3 933 776
- US-A1- 2013 000 323
- US-A1- 2014 290 265

## Description

### BACKGROUND OF THE INVENTION

This application relates to a gas turbine engine design that provides freedom in relative speed ratios between several components.

Gas turbine engines are known and typically include a fan delivering air into a bypass duct as propulsion air. The fan also delivers air into a core engine where it is compressed and delivered into a combustor. Air is mixed with fuel and ignited in the combustor and products of this combustion pass downstream over turbine rotors driving them to rotate.

Historically, a fan drive turbine rotated as one with the fan rotor. More recently, a gear reduction has been included between the fan drive turbine and the fan rotor. This allows the fan rotor to rotate at slower speeds, which allows the diameter of the fan rotor to increase. With such a change, bypass ratios increase and the fan drive turbine rotor is allowed to rotate at faster speeds, which increases efficiency.

In general, it has been proposed to use epicyclic gear reductions between the fan drive turbine and the fan rotor. The design of epicyclic gear reductions results in a limited number of possible relative speeds between the several components.

Epicyclic gear systems have been operated as a differential in some automotive applications. In such application, an engine may drive a planet carrier and a generator/starter may rotate with a sun gear. A motor may be provided to rotate with a ring gear. With such arrangements, it is possible to have various relative speeds.

US 2013/0000323 A1 discloses a gas turbine engine according to the preamble of claim 1.

EP 2 728 140 A2 discloses a booster assembly for gas turbine engine comprising a gearing, and DE 3933776 A1 discloses a prop-fan aircraft engine with contra-rotating fan rotors.

### SUMMARY OF THE INVENTION

The present invention provides a gas turbine engine as set forth in claim 1.

In an embodiment, the intermediate gear carrier rotating with a plurality of intermediate gears, the intermediate gears engaged with the ring gear and the sun gear.

In another embodiment according to any of the previous embodiments, relative speed between the ring gear, the intermediate gear carrier, and the sun gear are controlled during different operational conditions.

In another embodiment according to any of the previous embodiments, a control may operate to control at least one of a variable inlet guide vane leading to the first compressor, or an amount of fuel delivered to a combustor in the gas turbine engine.

In another embodiment according to any of the previous embodiments, structure is provided for preventing rotation of the first compressor in an undesired direction.

These and other features may be best understood from the following drawings and specification.

### BRIEF DESCRIPTION OF THE DRAWINGS

Figure 1 shows a geared gas turbine engine.
Figure 2 schematically shows a gas turbine engine.
Figure 3 shows a detail.
Figures 4A-4H show various achievable relative speeds between the components in the Figure 1 engine.
Figure 5A shows a first alternative arrangement.
Figure 5B shows a second alternative arrangement.
Figure 5C shows a third alternative arrangement.

### DETAILED DESCRIPTION

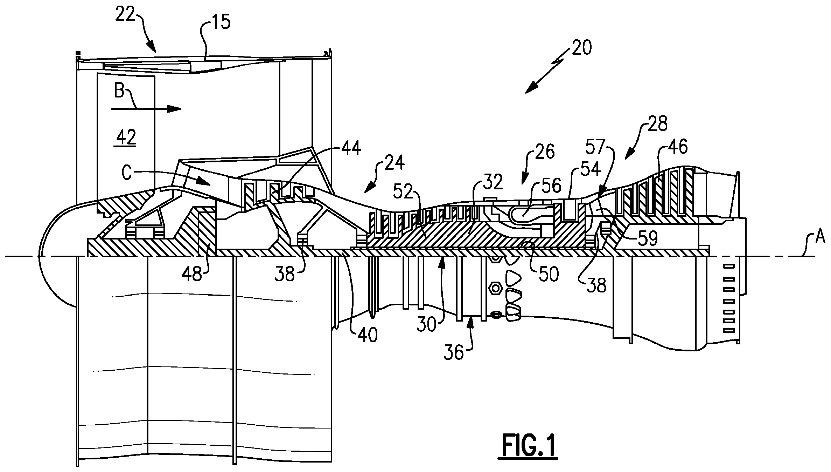

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x ⁹/₅). The "Low corrected fan tip speed" as disclosed herein according to one non-limiting embodiment is less than about 1150 ft / second (350.5 meters/second).

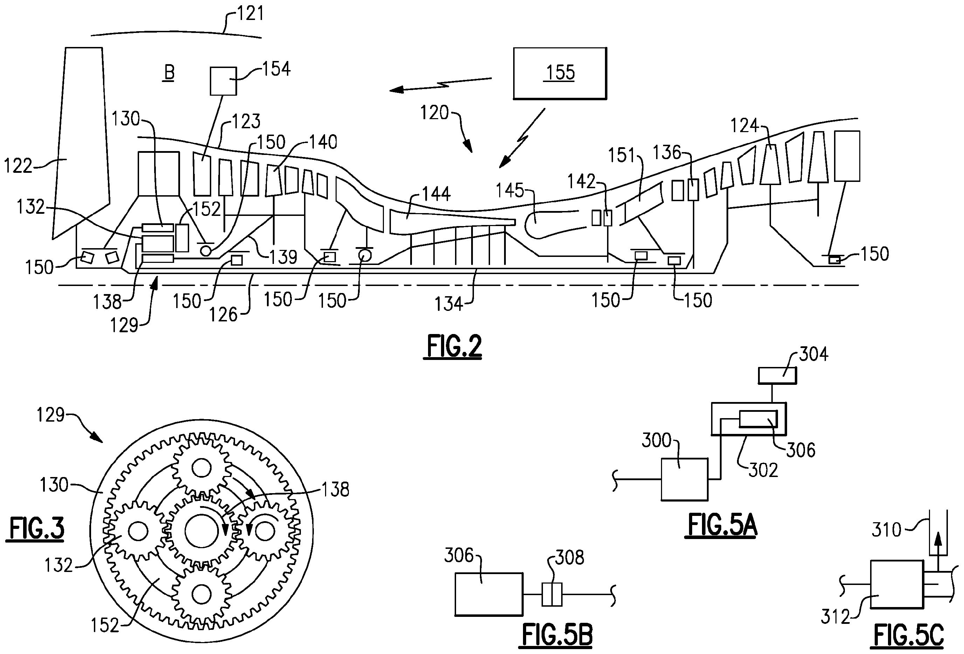

Figure 1 shows a geared gas turbine engine. There are limits on the gear ratios from the reduction 48. Figures 2 and 3 show an arrangement to achieve greater variation in speeds.

An engine 120 is illustrated in Figure 2. A fan rotor 122 is driven by a fan drive turbine 124 through a shaft 126. The shaft 126 also rotates with a ring gear 130 in an epicyclic gear system 129. The gear system 129 also includes a plurality of planet gears 132 that rotate with carrier 152 which rotates with a shaft 134 driven by an intermediate pressure turbine 136. A low pressure compressor 140 is driven by a sun gear 138 in the gear system 129 through shaft 139.

A high pressure turbine 142 rotates with a high pressure compressor 144.

As also shown in Figure 2, a fan case 121 surrounds the fan rotor 122 and defines a bypass duct B. A combustor 145 is shown. The bypass ratio for the engine 120 may be on the order of those mentioned above with regard to the Figure 1 geared gas turbine engine.

Returning to Figure 2, a plurality of bearings 150 are shown supporting the several shafts and rotating components. A mid-turbine frame 151 is supported on bearings, and includes a plurality of vanes for controlling the airflow from the turbine 142 approaching the turbine 136.

The fan drive turbine has more stages (3 shown) than the intermediate turbine (1 shown).

The high pressure turbine 142 operates at a higher pressure than the intermediate turbine 136 and the fan drive turbine 124. The high pressure compressor 144 operates at higher speeds than the low pressure compressor 140.

As shown in Figure 3, carrier 152 rotates with the intermediate or planet gears 132. In fact, it is the carrier 152, which is driven by the shaft 134.

With this arrangement, by controlling the relative speeds into the planet carrier 152 and the ring gear 130, various desired speed ratios can be achieved between the fan rotor 122, the low pressure compressor 140, and the turbines 124 and 136.

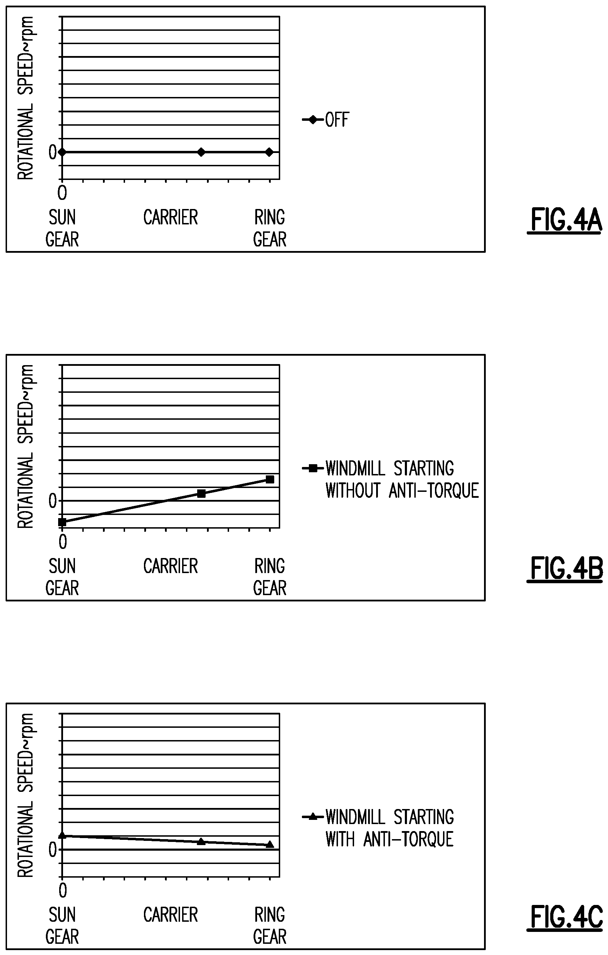

Examples are shown in Figures 4A-4G. Generally, by changing the relative speeds of the carrier 152 and ring gear 130, various changes in the output speed of the sun gear 138 can be achieved. These changes may be achieved by changing the position of the variable inlet guide vane 154 (see Figure 2) (IGV) of the low pressure compressor 140 and the fuel flow into the combustor 145. Table 1 lists example modes of engine operation, IGV position, rotational speed of the gear elements, the normalized ratio of the speed of the carrier with respect to the sun gear, the normalized ratio of the speed of the ring gear with respect to the sun gear, and a reference to Figures 4A thru 4G. These are with a geometry ratio of the ring gear radius to sun gear radius of 2.0.

A control 155 is shown schematically in Figure 2 and may be programmed to achieve the disclosed control.

**Table 1**

| **Design Geometry Ratio Radius Ring Gear:Radius Sun Gear = 2.0** | | | | | | | | |
|---|---|---|---|---|---|---|---|---|
| | | | | | | | | |

| **Figure 4** | **Engine Operation ∼ mode** | **Fuel Flow Rate** | **LPC IGV alpha ∼ position** | **Sun gear ∼ rpm** | **Carrier (of Planetary gears) ∼ rpm** | **Ring gear ∼ rpm** | **Speed Ratio of Carrier:Sun** | **Speed Ratio of Ring:Sun** |
|---|---|---|---|---|---|---|---|---|
| A | Off | Zero | Nominal | 0 | 0 | 0 | Not applicable | Not applicable |
| B | Windmill starting without anti -torque | Starting | Nominal | -3T | T | 3T | -33% | -100% |
| c | Windmill starting with anti-torque | Starting | Nominal | 4U | 2U | U | 50% | 25% |
| D | Non-windmill starting | Starting | Nominal | 3V | V | 0 | 33% | 0% |
| E | Idle | Low | Open | 4W | 6W | 7W | 150% | 175% |
| F | Cruise | Medium | Closed | 10W | 12W | 13W | 120% | 130% |
| G | Max Power | High | Open | 34W | 24W | 19W | 71% | 56% |

Figure 4A exemplary shows the speeds of the sun, carrier, and ring are zero when there is no fuel into the combustor and the engine is off. Figures 4B thru 4D consider various situations for starting the engine. Figures 4B thru 4C consider a windmilling start of the engine wherein the fan is rotated by the action of the air flowing through the fan when the aircraft is moving in flight.

Figure 4B shows that if the sun gear is permitted to rotate in a direction opposite to the carrier, then a higher speed of rotation of the fan is required to start the engine. It is preferred to prohibit the sun gear from rotating in a direction opposite to the carrier. This prohibition may be achieved by a worker of ordinary skill in the art. There are multiple ways of accomplishing this. As one example, the low pressure compressor 300 could power the accessory gearbox 302 as shown in Figure 5A. A control 304 could engage the starter motor 302 to power the low pressure compressor 300 forward. Alternatively, the sun gear 306 (or other feature on the low pressure compressor 300 rotor) could incorporate a ratcheting mechanism 308 to prevent backward motion as shown schematically in Figure 5B.

Figure 5C shows an air bleed 310 behind the low pressure compressor 300 which could be sized to induce sufficient flow through the low pressure compressor to prevent backward turning.

While these three alternatives are shown for preventing reverse rotation, a number of other structures may also be envisioned for preventing reverse rotation of the low pressure compressor.

Figure 4C shows a substantially slower speed of the ring gear and fan during windmill starting when the sun gear and ring gear rotate in the same direction.

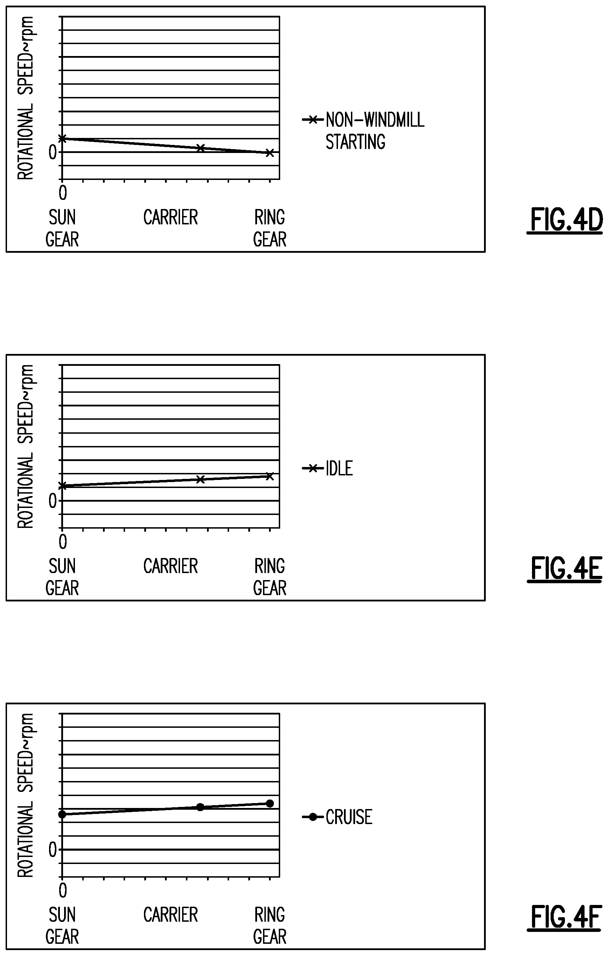

Figure 4D shows the engine can be started without windmilling the fan, as for example, starting the engine on the ground, and that the speed of the intermediate turbine 136 is slower and achieves the same rotational speed of the of the low pressure compressor 140 as in Figure 4C. In other words, the rotational speed, 4U, is equal to the rotational speed, 3V.

Figure 4E shows that when the IGV is open, the rotational speed of the fan rotor 122 as driven by the fan drive turbine 124 achieves an engine idle condition with the same rotational speed for the low pressure compressor 140 as during starting when the IGV is in a nominal position. In other words, the rotational speed, 4U, is equal to the rotational speed, 4W.

Figure 4F shows the engine achieves cruise power via increased fuel flow, higher fan speed and higher speed of the low pressure compressor with the IGV closed versus idle operation.

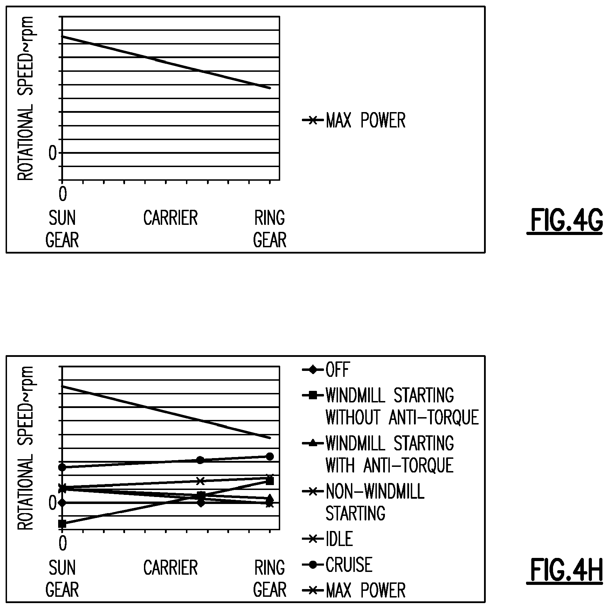

Figure 4G shows the engine achieves maximum power via a higher level of fuel flow and maximum fan speed and ring gear speed with a different relative speed of the carrier and ring gear versus the sun gear.

Figure 4H shows the aforementioned modes of engine operation and the various levels of rotational speed for the sun gear, carrier, and ring gear. For a given mode of engine operation, a straight line connects the speeds of the sun gear, carrier, and ring gear. Each line is a "see-saw" pivoting about the carrier as a "fulcrum." As a nomograph, the location of the "fulcrum" is determined from the geometry ratio, GR, of the gear system defined as the radius of the ring gear pitch line divided by the radius of the sun gear pitch line.

In Figures 4A thru 4H, the location of the carrier on the x-axis is a fraction of the location of the ring gear relative to the sun gear per the relationship, Xcarrier/Xring = GR/(1+GR). In Figures 4A thru 4H, the GR = 2.0 and the carrier is 66.7% of the distance along the x axis from the sun to the ring. Rocking the "see-saw" for each mode of engine operation changes the speed relationships between the sun gear, carrier, and ring gear and respectively between the speed of the low pressure compressor 140, intermediate turbine 136, and fan rotor 122 and achieves the desired mode of engine performance.

A worker of ordinary skill in the art would recognize how to design an appropriate gear reduction to achieve a desired output speed for the low pressure compressor 140 relative to the speed of fan rotor 122 and still achieve the desired speeds for the turbines 124 and 136. With this arrangement, a great deal more freedom can be achieved for having specifically designed and desired speed ratios across all of these components.

Although an embodiment of this invention has been disclosed, a worker of ordinary skill in this art would recognize that certain modifications would come within the scope of this invention. For that reason, the following claims should be studied to determine the true scope and content of this invention.

## Claims

1. A gas turbine engine (20;120) comprising:
a fan rotor (122) driven by a fan drive turbine (124), said fan drive turbine (124) also rotating with a ring gear (130);
a first compressor (140) driven by a sun gear (138);
a second turbine (136);
an intermediate gear carrier (152); and
a third turbine (142) configured to operate at a higher pressure than said second turbine (136) and said fan drive turbine (124), and driving a second compressor (144), said second compressor (144) operating at higher speeds than said first compressor (140),
**characterised in that**:
said intermediate gear carrier (152) rotates with said second turbine (136).

2. The gas turbine engine (20;120) as set forth in claim 1, wherein said intermediate gear carrier (152) rotates with a plurality of intermediate gears (132), said intermediate gears (132) engaged with said ring gear (130) and said sun gear (138).

3. The gas turbine engine (20;120) as set forth in any preceding claim, configured such that the relative speeds between said ring gear (130), said intermediate gear carrier (152), and said sun gear (138) are controlled during different operational conditions.

4. The gas turbine engine (20;120) as set forth in any preceding claim, wherein a control (156) may operate to control at least one of a variable inlet guide vane (154) leading to said first compressor (140), or an amount of fuel delivered to a combustor (145) in said gas turbine engine (20;120).

5. The gas turbine engine (20;120) as set forth in any preceding claim, wherein structure is provided for preventing rotation of said first compressor (140) in an undesired direction.

## Patentansprüche

1. Gasturbinenmotor (20; 120), umfassend:
ein Lüfterlaufrad (122), das von einer Lüfterantriebsturbine (124) angetrieben wird, wobei sich die Lüfterantriebsturbine (124) zudem mit einem Hohlrad (130) dreht;
einen ersten Verdichter (140), der von einem Sonnenrad (138) angetrieben wird;
eine zweite Turbine (136);
einen Zwischenzahnradträger (152); und
eine dritte Turbine (142), die dazu konfiguriert ist, mit einem höheren Druck betrieben zu werden als die zweite Turbine (136) und die Lüfterantriebsturbine (124), und einen zweiten Verdichter (144) antreibt, wobei der zweite Verdichter (144) mit höheren Drehzahlen betrieben wird als der erste Verdichter (140) ;
**dadurch gekennzeichnet, dass**:
sich der Zwischenzahnradträger (152) mit der zweiten Turbine (136) dreht.

2. Gasturbinenmotor (20; 120) nach Anspruch 1, wobei sich der Zwischenzahnradträger (152) mit einer Vielzahl von Zwischenzahnrädern (132) dreht, wobei die Zwischenzahnräder (132) mit dem Hohlrad (130) und dem Sonnenrad (138) in Eingriff stehen.

3. Gasturbinenmotor (20; 120) nach einem der vorhergehenden Ansprüche, der so konfiguriert ist, dass die relativen Drehzahlen zwischen dem Hohlrad (130), dem Zwischenzahnradträger (152) und dem Sonnenrad (138) unter unterschiedlichen Betriebsbedingungen gesteuert werden.

4. Gasturbinenmotor (20; 120) nach einem der vorhergehenden Ansprüche, wobei eine Steuerung (156) betrieben werden kann, um zumindest entweder eine variable Einlassleitschaufel (154), die zu dem ersten Verdichter (140) führt, oder eine Menge an Kraftstoff, die an eine Brennkammer (145) in dem Gasturbinenmotor (20; 120) abgegeben wird, zu steuern.

5. Gasturbinenmotor (20; 120) nach einem der vorhergehenden Ansprüche, wobei eine Struktur bereitgestellt wird, die eine Drehung des ersten Verdichters (140) in eine unerwünschte Richtung verhindert.

## Revendications

1. Moteur à turbine à gaz (20 ; 120) comprenant :
un rotor de ventilateur (122) entraîné par une turbine d'entraînement de ventilateur (124), ladite turbine d'entraînement de ventilateur (124) tournant également avec une roue dentée (130) ;
un premier compresseur (140) entraîné par une roue solaire (138) ;
une deuxième turbine (136) ;
un support d'engrenage intermédiaire (152) ; et
une troisième turbine (142) configurée pour fonctionner à une pression plus élevée que ladite deuxième turbine (136) et ladite turbine d'entraînement de ventilateur (124), et entraînant un second compresseur (144), ledit second compresseur (144) fonctionnant à des vitesses plus élevées que ledit premier compresseur (140),
**caractérisé en ce que** :
ledit support d'engrenage intermédiaire (152) tourne avec ladite deuxième turbine (136).

2. Moteur à turbine à gaz (20 ; 120) selon la revendication 1, dans lequel ledit support d'engrenage intermédiaire (152) tourne avec une pluralité d'engrenages intermédiaires (132), lesdits engrenages intermédiaires (132) venant en prise avec ladite roue dentée (130) et ladite roue solaire (138).

3. Moteur à turbine à gaz (20 ; 120) selon une quelconque revendication précédente, configuré de sorte que les vitesses relatives entre ladite roue dentée (130), ledit support d'engrenage intermédiaire (152) et ladite roue solaire (138) sont commandées dans différentes conditions de fonctionnement.

4. Moteur à turbine à gaz (20 ; 120) selon une quelconque revendication précédente, dans lequel une commande (156) peut fonctionner pour commander au moins l'une d'une aube de guidage d'entrée variable (154) menant audit premier compresseur (140), ou une quantité de carburant fournie à une chambre de combustion (145) dans ledit moteur à turbine à gaz (20 ; 120).

5. Moteur à turbine à gaz (20 ; 120) selon une quelconque revendication précédente, dans lequel une structure est prévue pour empêcher la rotation dudit premier compresseur (140) dans une direction indésirable.
